# EUROPEAN PATENT SPECIFICATION

(11) **EP 1 958 858 B1**
(45) Date of publication and mention of the grant of the patent: **28.09.2011**
(21) Application number: 08250502.5
(22) Date of filing: 12.02.2008
(51) Int. Cl.: B62J 17/02

(54) **Vehicle**
Fahrzeug
Véhicule

(30) Priority: 13.02.2007 JP 2007032683
(43) Date of publication of application: 20.08.2008
(73) Proprietor: Yamaha Hatsudoki Kabushiki Kaisha, Iwata-shi, Shizuoka 438-8501 (JP)
(72) Inventor: Yamamoto, Yoshiaki, Iwata-shi Shizuoka-ken 438-8501 (JP); Shimokawa, Hiroshi, Iwata-shi Shizuoka-ken 438-8501 (JP); Nakamura, Takuya, Iwata-shi Shizuoka-ken 438-8501 (JP)
(74) Representative: Lamb, Martin John Carstairs

(56) References cited:
- US-A- 3 819 226
- US-A1- 2001 048 403

## Description

### FIELD OF THE INVENTION

The present invention relates to a vehicle, and in particular to a vehicle with a cowling.

### BACKGROUND TO THE INVENTION

In many motorcycles, a cowling with a screen covers the front of a vehicle body and a panel with a handle or the like mounted thereon covers a rear side (a side facing a driver) of the cowling. JP-A-2002-59 discloses a motorcycle having such structure.

Also, JP-A-2005-028894 shows a structure in which a screen is mounted to a cowling.

In JP-A-2002-264859, connection of a cowling side and a panel surface, on which a handle or the like is arranged, is such that an upper edge of the cowling is contiguous to the panel surface through a surface, which is rearwardly steep at an acute angle. In this manner, with respect to connection of a cowling being an outer side of a vehicle body and a panel surface being an inner side of the vehicle body, the outer/inner relationship is conventionally discriminated definitely from a demand in design.

When an angle of connection is acute, however, a travel wind blows off along an inclination of an outer surface of a cowling and flow separation from a panel surface occurs. Accordingly, a region of negative pressure in front of a driver is liable to be established. In JP-A-2002-264859, a screen extends substantially over an overall width of a vehicle body which may eliminate or mitigate areas of negative pressure. However, many kinds of vehicles exist in which a screen is narrow in width as compared with a cowling such that the problems associated with negative pressures may still exist.

JP-A-2005-028894 does not relate to the structure of an outer/inner connection but aims at introducing a travel wind behind a screen to avoid the tendency of negative pressures being established. With this prior art reference, a center of a lower edge of a screen in a vehicle width direction is caused to float above a cowling, and a travel wind is directed to a space in front of a driver.

A mount structure of a screen disclosed in JP-A-2005-028894 is such that mount pieces project on both sides of the lower edge of the screen in the vehicle width direction and are fixed to screen mounts formed on a cowling side by nut and bolt arrangements and a lace is mounted in a manner to cover locations of mount from above.

However, such a mount structure involves a problem that a travel wind is taken only centrally in a widthwise direction of the screen, which is liable to create an obstacle to avoiding the tendency of negative pressures being created in a large area.

The invention has been devised in view of the aforementioned problems in the art and has its object to provide a vehicle with a cowling, which is effective in dissolving the tendency of a space in front of a driver to experience negative pressures.

### SUMMARY OF THE INVENTION

The present invention is defined in claim 1. Some preferred features are defined in the dependent claims.

Described herein is a vehicle comprising:
a cowling adapted to cover the front of the vehicle;
an inclined surface formed on a rear side of the cowling and downwardly extending toward the rear of the vehicle; and
a steering handle arranged relative to the inclined surface,
wherein at least a portion of a front edge of the inclined surface is connected to an upper edge of the cowling and an obtuse angle is defined between the vicinity of the front edge of the inclined surface and the vicinity of the upper edge of the cowling.

The inclined surface comprises:
a surface arranged centrally thereof to arrange the steering handle thereon; and
a roof surface of a storage chamber arranged on one side of the inclined surface in a vehicle width direction, wherein that surface of the inclined surface which forms an obtuse angle with the vicinity of the upper edge of the cowling comprises the roof surface of the storage chamber.

The inclined surface may comprise a plurality of roof surfaces of respective storage chambers. The storage chambers may be arranged on both sides of the inclined surface in a vehicle width direction. Alternatively the storage chambers may be arranged on one side of the inclined surface.

The vicinity of the upper edge of the cowling may be provided with a first easement surface adapted to further ease an angle of connection to the inclined surface.

The vicinity of the front edge of the inclined surface may be provided with a second easement surface adapted to further ease an angle of connection to the cowling.

The first easement surface and the second easement surface may be substantially flush with each other.

Also described herein is a vehicle comprising:
a cowling adapted to cover the front of the vehicle; and
a windshield screen arranged above the cowling,
wherein the screen is arranged to define a predetermined distance between an outer surface of the cowling and a lower edge of the screen.

The screen may be mounted to a portion of a body front surface of a meter visor which covers a meter from the front of the vehicle, wherein said portion of the body front surface is not covered by the cowling when viewed from the front of the vehicle.

Mount portions paired in a vehicle width direction may project from the body front surface of the meter visor in a ribbed manner to form a flow path for travel wind between the mount portions.

An enlarged region may be formed integrally on the screen to project outwardly of the mount portions in a vehicle width direction.

A reinforcement flange may be formed on a lower edge of the enlarged region to project toward a rear surface side.

Described herein is a vehicle with a cowling, comprising the cowling, which covers the front of the vehicle, and an inclined surface formed on a back side of the cowling to have a down grade toward the rear of the vehicle and to have a steering handle arranged centrally thereof, and wherein at least a part of a front edge of the inclined surface is connected to an upper edge of the cowling and an angle formed between the vicinity of the front edge of the inclined surface and the vicinity of the upper edge of the cowling is an obtuse angle.

In the case where an angle formed in a boundary portion of a cowling side and an inner side is an acute angle as in the related art, a space in front of a driver and on a back side of a cowling is liable to be made negative in pressure, but the tendency of being made negative in pressure is suppressed by making the angle obtuse as in the vehicle described herein.

The inclined surface may comprise a surface arranged centrally thereof to arrange the steering handle thereon and roof surfaces of small article storage chambers arranged on both sides of the surface in a vehicle width direction, and that surface of the inclined surface, which forms an obtuse angle between it and the vicinity of the upper edge of the cowling, comprises both roof surfaces of the small article storage chambers.

Thus, the roof surfaces of the small article storage chambers form an obtuse angle to the cowling, that is, an extent, to which the small article storage chambers are decreased in height in a longitudinal direction of the vehicle is small as compared with the case where an acute angle is formed, so that it is effective in ensuring a space for the small article storage chambers.

The vicinity of the upper edge of the cowling may be provided with a first easement surface, which further eases an angle of connection to the inclined surface.

Thus, the first easement surface is interposed between the vicinity of the upper edge of the cowling and the vicinity of the front edge of the inclined surface whereby it is possible to ease an abrupt change in angle between the both vicinities.

The vicinity of the front edge of the inclined surface may be provided with a second easement surface, which further eases an angle of connection to the cowling.

Thus, the easement surfaces may be provided on both the cowling side and the inclined surface side, so that it becomes easy to ensure a widthwise dimension for the easement surfaces in longitudinal direction and so it becomes easy to ease a change in angle.

The first easement surface and the second easement surface may be substantially flush with each other.

Thus, the first easement surface and the second easement surface are related to be substantially flush with each other, so that it is possible to make flow of an air smooth.

Described herein is a vehicle with a cowling, comprising the cowling, which covers the front of the vehicle, and a windshield screen arranged above the cowling, and wherein the screen is arranged in a state, in which an overall lower edge thereof is spaced a predetermined distance from an outer surface of the cowling.

Thus, a travel wind entering from a clearance between the screen and the cowling can be taken behind the screen, so that it is possible to inhibit a space in front of a driver from being made negative in pressure.

The screen may be mounted to a part of a body front surface of a meter visor, which covers a meter from the front of the vehicle, and which part is not covered by the cowling as viewed from the front of the vehicle but exposed forward.

Thus, the cowling is not forced to be changed in specifications even in the case where a screen having different specifications is mounted.

Mount portions paired in a vehicle width direction may project on the body front surface of the meter visor in a ribbed manner to form a through path of a travel wind between the both mount portions.

Thus, a travel wind flows along the through path, so that it is easy to lead a wind to a space in front of a driver, thus contributing to inhibition of the space from being made negative in pressure.

An enlarged region may be formed integrally on the screen to project outwardly of the both mount portions in a vehicle width direction.

Thus, the both widthwise sides of the screen project as an enlarged region, so that it is possible to directionally change a travel wind, which strikes against the enlarged region, sidewise, thus enabling easing a situation, in which a travel wind strikes against hands gripping the handle grips.

A reinforcement flange may be formed on a lower edge of the enlarged region to project toward a back surface side.

Since the enlarged region is one as cantilevered, it is susceptible to deformation under wind pressure, but in the vehicle described herein, a flange is formed on a lower edge thereof to achieve reinforcement, so that it is possible to effectively avoid deformation under wind pressure.

### BRIEF DESCRIPTION OF THE DRAWINGS

These and other aspects of the present invention will now be described, by way of example only, with reference to the accompanying drawings, in which:
Fig. 1 is a side view showing a whole scooter type motorcycle according to an embodiment of the present invention;
Fig. 2 is a plan view showing the whole scooter type motorcycle;
Fig. 3 is a front view showing, in enlarged scale, the front of the vehicle;
Fig. 4 is a rear view showing, in enlarged scale, the vicinity of a handle:
Fig. 5 is a cross sectional view taken along the line V-V in Fig. 2;
Fig. 6 is a cross sectional view taken along the line VI-VI in Fig. 2;
Fig. 7 is a cross sectional view taken along the line VII-VII in Fig. 2;

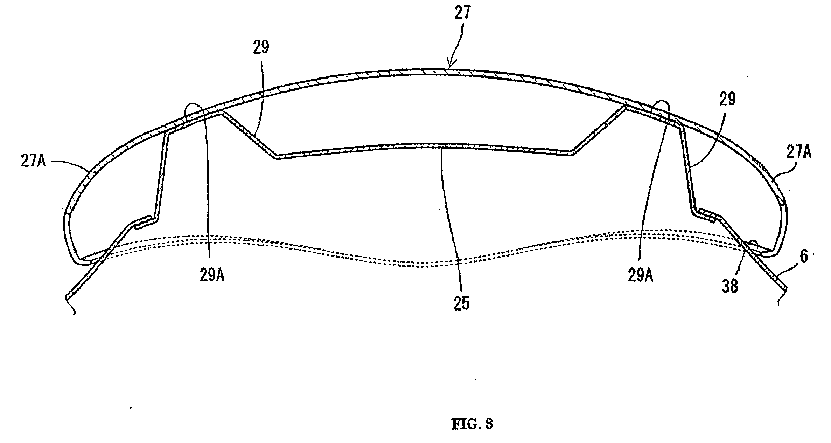

Fig. 8 is a cross sectional view taken along the line VIII-VIII in Fig. 1; and
Fig. 9 is a view illustrating the function of the invention.

### DETAILED DESCRIPTION OF THE DRAWINGS

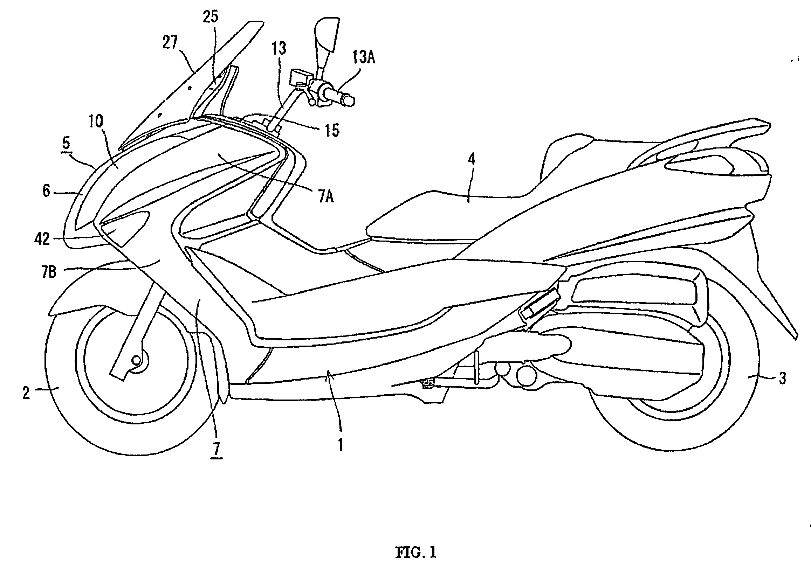

A scooter type motorcycle in accordance with an embodiment of the present invention is shown in Fig. 1 and is structured so that a whole body frame is covered by a frame cover 1. Reference numeral 2 denotes a front wheel, 3 a rear wheel, and 4 a seat provided to extend longitudinally from a center to a rear end of the vehicle to enable a driver and a fellow passenger to be seated thereon.

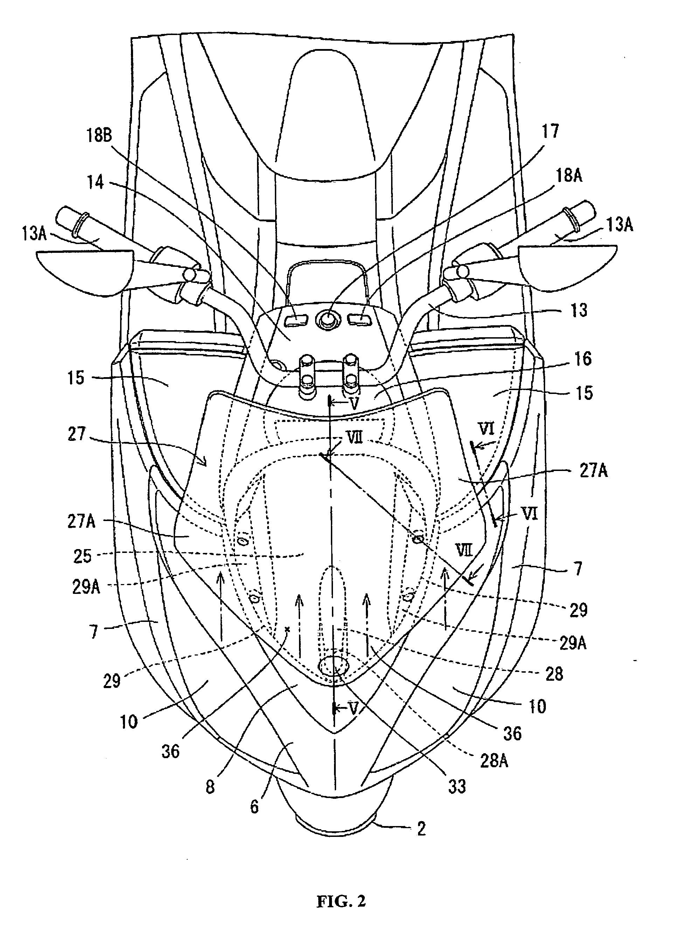

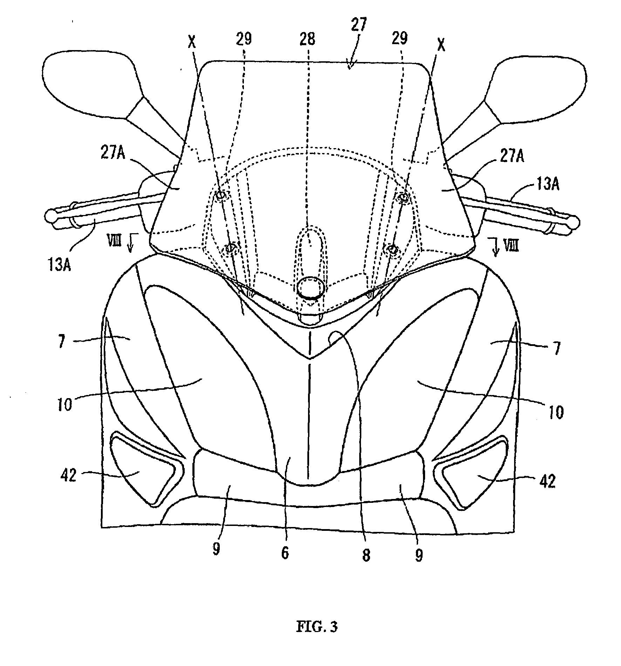

The frame cover 1 is composed of a plurality of members and a portion thereof, which covers the front of the vehicle, is composed of a cowling 5. As shown in Fig. 2, the cowling 5 comprises a center cowl 6 arranged centrally in a vehicle width direction and a pair of side cowls 7 arranged on both sides thereof in the vehicle width direction. The center cowl 6 is assembled so that a widthwise center thereof is aligned with a center in the vehicle width direction. Also, an upper edge of the center cowl 6 is scooped in a substantially V-shaped manner so that its center in the vehicle width direction defines a top, and a peripheral edge of the scooped portion is formed with a concave surface portion 8, which is lowered by a tier as compared with the remaining surface. The concave surface portion 8 is formed to be gradually decreased in longitudinal width as it goes toward both widthwise end sides of the center cowl 6 and to be made shallow toward an upper edge of the center cowl 6. On the other hand, as shown in Fig. 3, a widthwise central portion of the center cowl 6 is formed to be curved so that both side edges thereof diverge obliquely rearward as they go upward from lower portions of front ends thereof. Also, a pair of horizontal portions 9, 9 project outward in the vehicle width direction from a lower portion of a front end of the center cowl 6 to compartment and form openings between the widthwise central portion of the center cowl 6 and opposite side edges of the both side cowls 7, thus enabling assembling head lamps 10 inside thereof.

As shown in Fig. 1, the both side cowls 7 are formed from side forming portions 7A extending on both widthwise sides of the center cowl 6 in a longitudinal direction of the center cowl 6 and leg protecting portions 7B depending from fronts of the side forming portions 7A to cover the front of a driver's legs, and are generally substantially L-shaped as viewed in side view. Also, flasher or indicator lamps 42 formed with openings are assembled on front sides of the both side cowls 7 and close to boundaries of the side forming portions 7A and the leg protecting portions 7B.

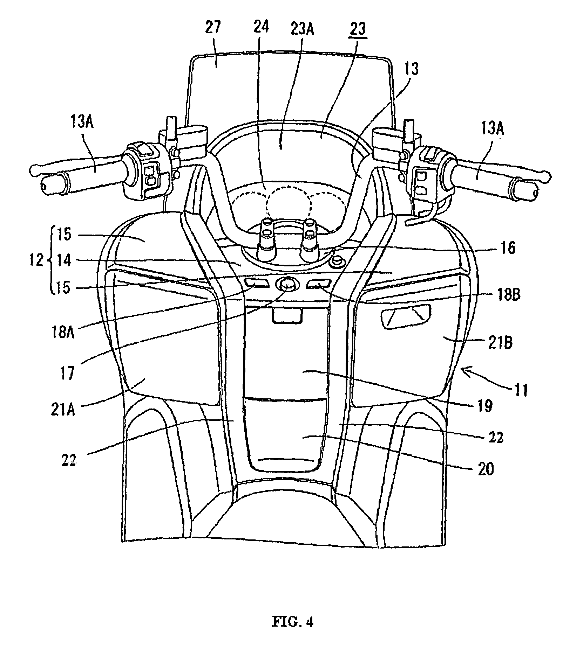

Fig. 4 shows a vehicle as viewed from a driver side and a manner, in which a back side of the cowling 5 is covered by an inner cover 11 (constitutes a part of the frame cover 1). The inner cover 11 houses therein a box-structured inner frame as a skeleton structure and is composed of the side cowls 7, which covers a front side thereof, a plurality of panels, or lids, etc., which are described later.

An inclined surface 12 having a gentle down grade or declining slope toward the rear of the vehicle (toward a driver) is formed over an overall width of the vehicle body on an upper surface of the inner cover 11. In this embodiment, the inclined surface 12 is formed from three surfaces in total, that is, a center panel 14, on which a handle 13 for steering is arranged, and a pair of pocket or compartment roof panels 15 arranged on both sides thereof in the vehicle width direction. A handle holder 16 mounted to an upper end of a handle post (not shown) is arranged rotatably on the center panel 14 and a central portion of the handle 13 is fixed to the handle holder 16. Also, a smart key switch 17 and lid opener switches 18A, 18B for unlocking of various lids (a fuel lid 20, a lid 21A for small article storage chamber, etc.) usually configured in a locked state are arranged rearwardly of the handle holder 16 on the center panel 14.

A center pocket lid 19 is provided contiguous to a lower edge of a rear end of the center panel 14 in a steep state. The center pocket lid 19 includes a hinge at a lower edge thereof and can open and close a small article storage chamber, which is compartmented and formed therein, through the hinge. Also, a fuel lid 20, which covers a fuel supply port (not shown), is provided contiguous to and below the center pocket lid 19 and can be opened and closed through a hinge formed at a lower edge thereof.

Side pocket lids 21A, 21B are provided contiguous to lower edges of rear ends of the both left and right pocket roof panels 15 in a steep state. The both side pocket lids 21A, 21B are also provided at lower edges thereof with hinges and can open and close small article storage chambers, which are compartmented and formed therein, through the hinges.

In addition, a pair of left and right partition members 22 are interposed between the center panel 14 and the both pocket roof panels 15 to partition the inclined surface 12 into three surfaces. The partition members 22 are mounted in a state of projecting from surfaces of the center panel 14 and the pocket roof panels 15 and in the embodiment, the partition members 22 extend between the center pocket lid 19 and the both side pocket lids 21A, 21B and in a region extending to a lower edge of the fuel lid 20 through both sides thereof. Since surfaces of the both pocket roof panels 15 have a little down grade or incline toward the center panel, the partition members 22 function as barriers in a manner to inhibit rainwater falling on the pocket roof panels 15 from gathering toward the center panel 14.

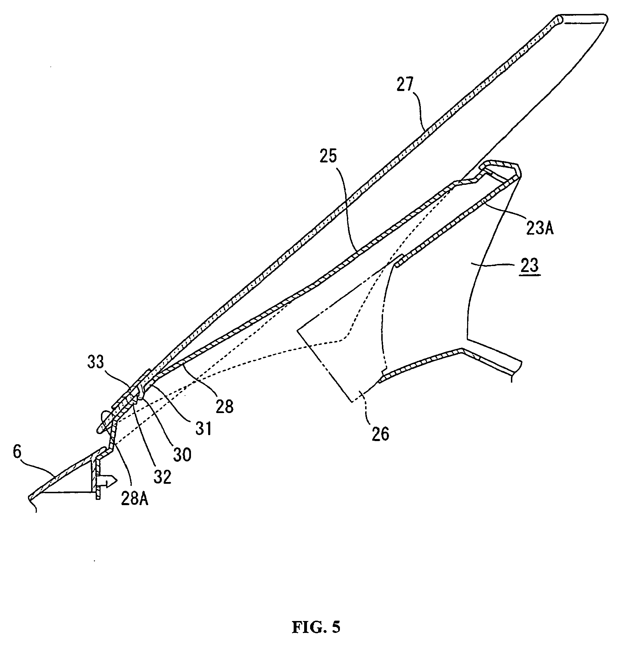

A meter frame 23, which assembles various measuring instruments such as a speedometer, etc. in a unitary state, is arranged in front (inner part) of the center panel 14 and a meter display surface 24 is formed on a front surface thereof in an obliquely upwardly upright state. The meter frame 23 is formed with a roof portion 23A, which extends obliquely upward toward a driver from an overall upper edge of the meter display surface 24. Also, as shown in Fig. 5, a meter visor 25 is assembled to a front, upper portion of the meter frame 23 to cover an upper portion of a meter unit 26 from the front of the vehicle. A peripheral edge of the meter visor 25 is formed to be conformed to a shape of a substantially V-shaped, scraped portion of the center cowl 6. The meter visor 25 is screwed to the center cowl 6 at three locations thereof, that is, a front end and both side edges to be fixed thereby. Also, the meter visor 25 is mounted in a state of projecting a little upward from an outer surface of the center cowl 6 and has a windshield screen 27 fixed to an upper surface thereof in the following manner.

Mount portions 28, 29 for mounting to the screen 27 are provided integrally on an upper surface of the meter visor 25 to be aligned in three ridges in the vehicle width direction and, respectively, formed to extend substantially vertically in a ribbed configuration (see Fig. 3). In the embodiment, the center mount portion 28 is located centrally in the vehicle width direction and the pair of side mount portions 29 are arranged to be interposed by the former in the vehicle width direction. The center mount portion 28 is formed to be short in longitudinal length as compared with the side mount portions 29 and to have a lengthwise dimension from a front end of the meter visor 25 to around a center in a vertical direction. The center mount portion 28 is formed on an upper surface thereof with a flat surface, which is located toward a front end thereof and makes a mount surface 28A. The mount surface 28A is provided with a structure, which serves to temporarily retain the screen 27 before fully retaining it (see Fig. 5). That is, the mount surface 28A is formed with an insertion hole 31, which is opened to afford inserting thereinto a temporary pawl 30 formed on the screen 27, and formed at a front edge thereof with a temporary latch piece 32, which can flex inward and outward to have the temporary pawl 30 temporarily latched thereon elastically. An opaque cover member 33 serving also as an ornament is mounted to an outer surface of the screen 27 so as to prevent such state of temporary latch from being seen through the screen from outside.

In addition, the center mount portion 28 is formed forwardly of the mount surface 28A with a steep slope but formed rearwardly and toward a rear end thereof with a gentle slope.

On the other hand, the both side mount portions 29 are formed over a lengthwise region from the front edge of the meter visor 25 to a rear end thereof and increased gradually in height of projection as they go rearward, and mount surfaces 29A formed on upper surfaces of the side mount portions are likewise upwardly inclined rearward. Also, both mount surfaces 29A are formed in two front and rear locations with screw holes 34, so that the screen 27 can be clamped by screws 35 from the outer surface of the screen 27 to be fully retained. In such fully retained state, the screen 27 is supported in a "floating state", in which a predetermined spacing is ensured between an overall lower edge thereof and an outer surface of the cowling 5. In combination with this, both side mount portions 29 are arranged with a predetermined spacing from the center mount portion as described above, so that spaces defined between the mount portions 28, 29 and an inner surface of the screen 27 make baffle passages 36, 36 for a travel wind (see Fig. 2).

The screen 27 is formed from a transparent resin material and sized to enable covering an overall upper surface of the meter visor 25 as viewed in front view. The screen 27 is formed with through-holes 37, which are positioned to correspond to the respective screw holes 34 of the meter visor 25 and through which the screws 35 for fixation of the screen are clamped as described above. The screen 27 includes enlarged regions 27A enlarged outward in the vehicle width direction from lines (lines indicated by X in Fig. 3), along which the both side mount surfaces 29 are extended. The enlarged regions 27A have grip portions 13A of the handle 13 exposed as viewed in front view but serve to deflect wind which strikes against the enlarged regions 27A outwardly in the vehicle width direction to decrease direct influences on hands, which grip the grip portions 13A.

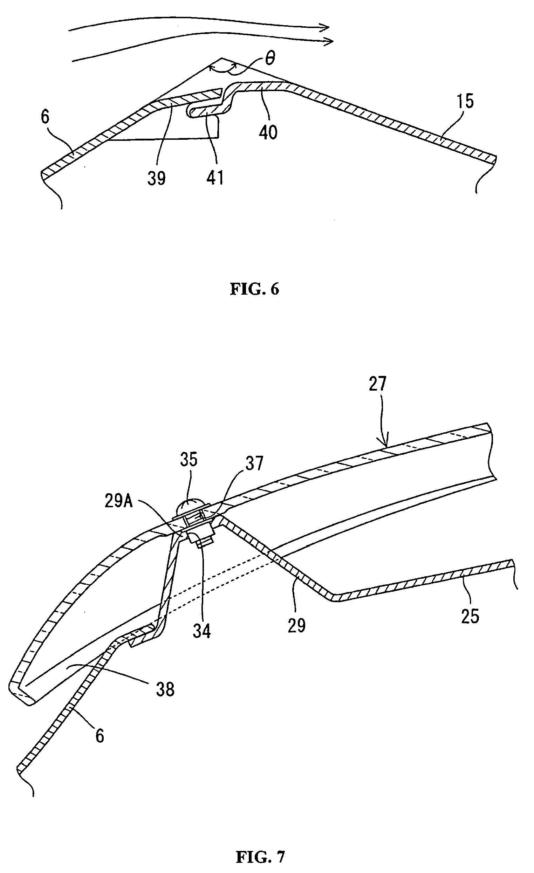

Since the enlarged regions 27A are cantilevered with lower edges and side edges thereof being free, however, there is a possibility of deformation occurring under wind pressure of a travel wind. Therefore, according to the embodiment, overall lower edges (more specifically, including partial regions contiguous to insides of the enlarged regions 27A) of the enlarged regions 27A are bent inward at substantially right angles to form integrally projecting reinforcement flanges 38 (see Fig. 7).

The lower edge of the screen 27 is sloped to recede toward side edges thereof with a center in the vehicle width direction being an apex as viewed in plan view (see Fig. 2) . Also, the lower edge is formed with an upward incline to be conformed to an outer surface shape of the center cowl 6 as viewed in side view (see Fig. 1) . Further, with the screen 27, only lower corner regions of the both enlarged regions 27A are bent inward in a high degree as compared with the remaining regions and lower edges of the regions are put in a positionally steep relationship with an upper surface of the center cowl 6. Owing to this, the overall lower edge of the screen 27 is spaced substantially uniformly from the outer surface of the center cowl 6 except the concave surface portion 8. Accordingly, a situation, in which a travel wind is taken from below the lower edge of the screen 27, is made uniform over the overall lower edge thereof.

According to the present embodiment, connected portions of the upper edge of the center cowl 6 and front edges of the both pocket roof panels 15 are orientated in the following relationship (see Fig. 6). That is, Fig. 6 is a cross sectional view taken along the line VI-VI in Fig. 2 and shows a cross section sectioned in a substantially longitudinal direction of the vehicle. As seen from Fig. 6, an angle (θ) is defined between a general portion in the vicinity of the upper edge of the center cowl 6 and a general portion in the vicinity of the corresponding front edges of the pocket roof panels 15. The angle (θ) is obtuse. Accordingly, while a travel wind passes above the connected portions, a through path of the travel wind can be extended along upper surfaces of the pocket roof panels 15 as compared with the case of being conventionally set at an acute angle (In Fig. 6, arrows indicate a flowing situation of a travel wind). Also, in the case where a person having an average body height stands in front of a vehicle, it is possible to visually see even outer surfaces of the pocket roof panels 15 over the cowling 5, so that in order to prevent continuity of a surface ornament from being interrupted, an ornament united in design (continuity of a pattern and the same color, etc.) is applied to the cowling 5 and the pocket roof panels 15.

Also, a portion in the vicinity of the upper edge of the center cowl 6, which butts against the front edges of the pocket roof panels 15, is formed with a first easement surface 39, which is set to be more gentle in slope than the general portion and projects rearward. On the other hand, second easement surfaces 40 set to be more gentle in slope than the general portion project forward in the vicinity of the front edges of the pocket roof panels 15. Both first and second easement surfaces are opposed to and flush with each other as shown in Fig. 6. Also, the second easement surfaces 40 are formed at tip edges thereof with latch pieces, which enter below the first easement surface 39 to be latched thereon and project in a state of being bent in a substantially L-shaped manner.

The embodiment constructed in the manner described above has the following function and effect. As the vehicle travels, a travel wind applied to the cowling 5 rises along an inclination of the outer surface of the cowling 5 and enters inside the screen 27 from a clearance held between the cowling and the overall lower edge of the screen 27. A path during the passage through the screen 27 includes a path passing through the baffle passages 36, 36 a little to the center and a path passing below the both enlarged regions 27A of the screen 27 as shown in Fig. 2. The path along the baffle passages 36 rises along an inclination of the upper surface of the meter visor 25 and blows off in front of a driver from an upper edge of the meter visor 25. While passing above the meter visor 25, a travel wind is guided by the projections, that is, the center mount portion 28 and the side mount portions 29, so that it is possible to rectify the travel wind to stably forward the wind forwardly of a driver. Besides, since such function exhibits itself making use of the structure of mounting of the screen 27, it serves to make an existing structure serve a double purpose to simplify a structure on the back side of the screen 27.

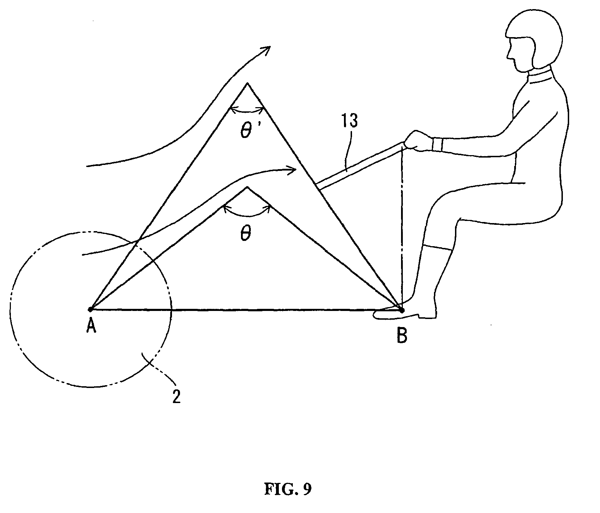

On the other hand, the center cowl 6 and the pocket roof panels 15 make an obtuse angle in the path passing below both enlarged regions 27A, so that a travel wind flowing along the slope of the outer surface of the center cowl 6 is made liable to flow along the upper surfaces of the pocket roof panels 15. This situation is specifically described with reference to Fig. 9. In the figure, consider two triangles, of which bases are given by a line segment connecting between a front-wheel position (position indicated by A) and a horizontal position (position indicated by B) in a location, at which a driver grips the handle 13. One of the triangles has an obtuse angle (θ > 90 degrees) at an apex and the other of the triangles has an acute angle (θ < 90 degrees). It is possible to consider that an upper one out of left sides of the both triangles corresponds to the upper surface of the center cowl 6 and an upper one out of right sides corresponds to the upper surfaces of the pocket roof panels 15. In this case, with one having an acute angle at an apex, an inclination of the right side (the center cowl 6) is large, so that flow separation of a travel wind may occur by blowing off along the inclination and flowing above and away without flowing along the upper surfaces (the pocket roof panels 15) on the right side. Accordingly, a situation arises in which a space in front of a driver (in particular, the upper half of the body) is liable to experiencing a negative pressure. In contrast, with one having an obtuse angle at an apex, an inclination of the left side (the center cowl 6) is small, so that even when a travel wind blows off along the inclination, flow separation is liable not to occur as the wind will follow a path along the upper surfaces (the pocket roof panels 15) on the right side. Accordingly, a travel wind flows into a space in front of a driver to contribute to a decrease in that extent, to which the space is made negative in pressure.

Also, as apparent from the figure, the triangle having an obtuse angle at an apex is lower in overall triangle height than one having an acute angle. This means that a position, in which the pocket roof panels 15 and the center cowl 6 are connected to each other, becomes low in height, so that a driver is given a significance that a field of front vision is enlarged.

Also, according to the embodiment, a mating part, to which the center cowl 6 is connected, comprises the pocket roof panels 15 defining a roof surface for an article storage space, and the pocket roof panels are gentle in slope to be effective in ensuring a volume for the article storage space.

Further, according to the embodiment, the first and second easement surfaces 39, 40 are interposed between connected portions of the center cowl 6 and the pocket roof panels 15 and connection is achieved at a further smaller angle than that with the general portion, so that it is possible to ease an angular change at the connected portions. While the easement surfaces 39, 40 may be formed only on either of the center cowl 6 and the pocket roof panels 15, formation on the both makes it easy to ensure widthwise dimensions for the easement surfaces 39, 40 themselves while ensuring the strength therefor. In this case, a travel wind is not obstructed in flow when both easement surfaces 39, 40 are caused to butt against each other in a flush manner according to the embodiment.

According to the embodiment, the screen 27 is mounted to the meter visor 25. That is, since the meter visor 25 is a member exposed to the front without being covered by the cowling 5 and the screen 27 is mounted making use of the meter visor 25, it is possible to simply perform mounting and dismounting. Additionally, the upper surface of the meter visor 25 is relatively large in area, which contributes to an improvement in workability. Also, since the screen 27 is mounted in a state of being separated from the cowling 5, there is no influence on the cowling 5 and the screen 27 may be readily interchanged, for example to provide a different size and shape, etc.

Also, since the screen 27 is formed with the enlarged regions 27A, which are enlarged laterally of portions thereof mounted to the meter visor 25, a travel wind striking against the enlarged regions 27A is deflected outwardly in the vehicle width direction, thus acting to deflect a travel wind, which would otherwise be incident on the grip portions 13A of the handle. Thus it is possible to effectively ease a situation, in which a travel wind strikes directly against hands gripping the grip portions 13A of the handle. Further, since the enlarged regions 27A are reinforced by the flanges 38 formed on the lower edges thereof, it is possible to avoid deformation under wind pressure.

It should be understood that the embodiment described is merely exemplary and that various modifications may be made thereto without departing from the scope of the present invention defined by the claims. For example, the following modifications are included within the technical scope of the invention.

According to the described embodiment, the invention is applied to a scooter type motorcycle but the invention is widely applicable to other saddle-type vehicles such as a snowmobile, etc.

According to the described embodiment, it is shown that the inclined surface is divided into three panels in total, that is, a center panel and both widthwise side panels but it may be formed integrally from a single panel.

According to the described embodiment, the center mount portion 28 is arranged between both side mount portions 29 but a construction is sufficient in which the center mount portion 28 is dispensed with and only a single baffle passage 36 is provided in a single ridge.

### Description of Reference Numerals and Signs

- 5:: cowling
- 6:: center cowl
- 12:: inclined surface
- 13:: handle
- 15:: pocket roof panel
- 25:: meter visor
- 27:: screen
- 27A:: enlarged region
- 29:: side mount portion
- 36:: baffle passage
- 38:: flange
- 39:: first easement surface
- 40:: second easement surface

## Claims

1. A vehicle comprising:
a cowling (5) adapted to cover the front of the vehicle, wherein the cowling includes a centre cowl (6);
an inclined surface (12) formed on a rear side of the cowling (5) and downwardly extending toward the rear of the vehicle, wherein the inclined surface (12) comprises a surface (14) arranged centrally thereof and a roof surface (15) of a storage chamber arranged on one side of the inclined surface (12) in a vehicle width direction;
a steering handle (13) arranged on the central surface (14) of the inclined surface (12); and
a screen (27) arranged in front of the inclined surface (12) and above the cowling (5) to define a gap between a lower surface of the screen (27) and an outer surface of the cowling (5), wherein the gap permits traveling wind to flow therethrough,
wherein at least a portion of a front edge of the inclined surface (12) is connected to an upper edge of the cowling (5) and an obtuse angle (θ) is defined between the vicinity of the front edge of the roof surface (15) of the inclined surface (12) and the vicinity of the upper edge of the centre cowl (6) of the cowling (5) to permit wind which has passed through the gap between the screen (27) to be liable to flow along the inclined surface (12).

2. The vehicle according to claim 1, wherein the inclined surface (12) comprises a plurality of roof surfaces (15) of respective storage chambers arranged on both sides of the inclined surface (12) in a vehicle width direction.

3. The vehicle according to any preceding claim, wherein the vicinity of the upper edge of the cowling (5) is provided with a first easement surface (39) adapted to further ease an angle of connection to the inclined surface (12).

4. The vehicle according to any preceding claim, wherein the vicinity of the front edge of the inclined surface (12) is provided with a second easement surface (40) adapted to further ease an angle of connection to the cowling (5).

5. The vehicle according to claim 3 and 4, wherein the first easement surface (39) and the second easement surface (40) are substantially flush with each other.

## Patentansprüche

1. Fahrzeug, das Folgendes umfasst:
eine Verkleidung (5), die dafür eingerichtet ist, den vorderen Teil des Fahrzeugs abzudecken, wobei die Verkleidung eine Mittelhaube (6) einschließt,
eine geneigte Fläche (12), die auf einer Rückseite der Verkleidung (5) geformt ist und sich nach unten zu dem hinteren Teil des Fahrzeugs hin erstreckt, wobei die geneigte Fläche (12) eine Fläche (14), die mittig von derselben angeordnet ist, und eine Dachfläche (15) einer Aufbewahrungskammer, die in einer Fahrzeug-Breitenrichtung auf einer Seite der geneigten Fläche (12) angeordnet ist, umfasst,
eine Lenkstange (13), der auf der mittigen Fläche (14) der geneigten Fläche (12) angeordnet ist, und
eine Windschutzscheibe (27), die vor der geneigten Fläche (12) und oberhalb der Verkleidung (5) angeordnet ist, um einen Spalt zwischen einer unteren Fläche der Windschutzscheibe (27) und einer Außenfläche der Verkleidung (5) zu definieren, wobei der Spalt es ermöglicht, dass Fahrtwind durch denselben strömt,
wobei wenigstens ein Abschnitt einer Vorderkante der geneigten Fläche (12) mit einer Oberkante der Verkleidung (5) verbunden ist und ein stumpfer Winkel (θ) zwischen dem Nahbereich der Vorderkante der Dachfläche (15) der geneigten Fläche (12) und dem Nahbereich der Oberkante der Mittelhaube (6) der Verkleidung (5) definiert wird, um zu ermöglichen, dass Wind, der durch den Spalt zwischen der Windschutzscheibe (27) hindurchgegangen ist, dazu neigt, längs der geneigten Fläche (12) zu strömen.

2. Fahrzeug nach Anspruch 1, wobei die geneigte Fläche (12) mehrere Dachflächen (15) von jeweiligen Aufbewahrungskammern, die in einer Fahrzeug-Breitenrichtung auf beiden Seiten der geneigten Fläche (12) angeordnet sind, umfasst.

3. Fahrzeug nach einem der vorhergehenden Ansprüche, wobei der Nahbereich der Oberkante der Verkleidung (5) mit einer ersten Übergangsfläche (39) versehen ist, die dafür eingerichtet ist, einen Verbindungswinkel zu der geneigten Fläche (12) weiter zu vermindern.

4. Fahrzeug nach einem der vorhergehenden Ansprüche, wobei der Nahbereich der Vorderkante der geneigten Fläche (12) mit einer zweiten Übergangsfläche (40) versehen ist, die dafür eingerichtet ist, einen Verbindungswinkel zu der Verkleidung (5) weiter zu vermindern.

5. Fahrzeug nach Anspruch 3 und 4, wobei die erste Übergangsfläche (39) und die zweite Übergangsfläche (40) im Wesentlichen bündig miteinander sind.

## Revendications

1. Véhicule, comprenant :
un capot (5), adapté pour recouvrir l'avant du véhicule, le capot englobant une partie centrale de capot (6) ;
une surface inclinée (12) formée sur un côté arrière du capot (5) et s'étendant vers le bas, vers l'arrière du véhicule, la surface inclinée (12) comprenant une surface (14) agencée en son centre et une surface de toit (15) d'une chambre de stockage agencée sur un côté de la surface inclinée (12), dans une direction de la largeur du véhicule ;
un guidon de direction (13) agencé sur la surface centrale (14) de la surface inclinée (12) ; et
un pare-brise (27), agencé devant la surface inclinée (12) et au-dessus du capot (5), pour définir un espace entre une surface inférieure du pare-brise (27) et une surface externe du capot (5), l'espace permettant la traversée du vent ;
au moins une partie d'un bord avant de la surface inclinée (12) étant connectée à un bord supérieur du capot (5), un angle obtus (θ) étant défini entre le voisinage du bord avant de la surface de toit (15) de la surface inclinée (12) et le voisinage du bord supérieur de la partie centrale (6) du capot (5), pour permettre l'écoulement du vent, ayant traversé l'espace entre le pare-brise (27) le long de la surface inclinée (12).

2. Véhicule selon la revendication 1, dans lequel la surface inclinée (12) comprend plusieurs surfaces de toit (15) de chambres de stockage respectives agencées sur les deux côtés de la surface inclinée (12), dans une direction de la largeur du véhicule.

3. Véhicule selon l'une quelconque des revendications précédentes, dans lequel le voisinage du bord supérieur du capot (5) comporte une première surface d'atténuation (39) adaptée pour atténuer davantage un angle de raccordement par rapport à la surface inclinée (12).

4. Véhicule selon l'une quelconque des revendications précédentes, dans lequel le voisinage du bord avant de la surface inclinée (12) comporte une deuxième surface d'atténuation (40), adaptée pour atténuer davantage un angle de raccordement par rapport au capot (5).

5. Véhicule selon les revendications 3 ou 4, dans lequel la première surface d'atténuation (39) et la deuxième surface d'atténuation (40) sont pratiquement agencées en affleurement.
